Europäisches Patentamt

European Patent Office

Office européen des brevets

(11) Veröffentlichungsnummer: **0 323 564**
**A2**

## (12) EUROPÄISCHE PATENTANMELDUNG

(21) Anmeldenummer: 88119513.5

(22) Anmeldetag: 23.11.88

(51) Int. Cl.⁴: **G01N 21/89**

(30) Priorität: 04.01.88 DE 3800053

(43) Veröffentlichungstag der Anmeldung:
**12.07.89 Patentblatt 89/28**

(84) Benannte Vertragsstaaten:
**AT BE CH DE ES FR GB IT LI NL**

(71) Anmelder: **Erwin Sick GmbH Optik-Elektronik**
**Sebastian-Kneipp-Strasse 1**
**D-7808 Waldkirch(DE)**

(72) Erfinder: **Pietzsch, Karl, Dr.**
**Richard-Wagner-Strasse 2**
**D-8192 Geretsried(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heijn**
**B.Sc.(Phys.) Morgan**
**Robert-Koch-Strasse 1**
**D-8000 München 22(DE)**

(54) **Optische Fehlerinspektionsvorrichtung.**

(57) Eine optische Fehlerinspektionsvorrichtung für die Erkennung von in einem ebenen transparenten Blattmaterial endlicher Dicke vorhandenen Fehlstellen und von deren Lage zwischen den beiden Oberflächen weist eine Licht-Abtast-Empfangsanordnung auf, welche das Material mit einem schräg auf die Oberfläche auftreffenden, innerhalb einer Fahrstrahlebene parallel zu sich selbst verschobenen Fahrstrahl zeilenweise abtastet und vom Material spiegelnd reflektiertes Licht empfängt und photoelektrisch auswertet. Die Fahrstrahlebene steht senkrecht auf den Oberflächen 11, 12 des Materials 13, und die Fahrstrahlen 14 treffen schräg auf die Oberflächen 11, 12 des Materials 13 auf. Das von einem das reflektierte Licht empfangenden Photoempfänger 15 gebildete Videosignal wird in bezug auf Amplitudenhöhen und -abstände ausgewertet.

## Fig. 1

EP 0 323 564 A2

## Optische Fehlerinspektionsvorrichtung

Die Erfindung betrifft eine optische Fehlerinspektionsvorrichtung für die Erkennung von in einem vorzugsweise ebenen transparenten Platten- oder Blattmaterial endlicher Dicke vorhandenen Fehlstellen und von deren Lage zwischen den beiden Oberflächen, mit einer telezentrischen Licht-Abtast-Empfangsanordnung, welche das Material mit einem schräg auf die Oberfläche auftreffenden, innerhalb einer Fahrstrahlebene parallel zu sich selbst verschobenen Fahrstrahl zeilenweise abtastet und vom Material spiegelnd reflektiertes Licht empfängt und photoelektrisch auswertet.

Bei verschiedenen transparenten Materialien hängt die Fehlerbewertung nicht nur von der Art und der Größe der Defekte ab, sondern auch von der Lage der Fehler innerhalb des Materials, d.h. von der Fehlerhöhe über der unteren Oberfläche des transparenten Materials. Das ist insbesondere bei optischen Datenträgern (z.B. CD-Audio, CD-ROM) der Fall. Weil optische Datenträger mit einem Laserstrahl großer Apertur (numerische Apertur $A_n \geq 0{,}45$, was je nach Brechungsindex des Materials einem Öffnungswinkel des Auslesestrahls von $\geq 35^\circ$ im Material entspricht) ausgelesen werden, wirken sich Defekte im allgemeinen umso kritischer aus, je näher sie sich der Informationsebene befinden, d.h. je geringer ihr Abstand von der Substratunterseite ist. Neben der Erkennung der Fehlerart und der Bewertung der Fehlergröße ist also auch eine Bewertung der Fehlerlage innerhalb des Materials für ein von einer vollautomatischen Abtastvorrichtung zu findendes Qualitätsurteil von Interesse.

Die Aufgabe der Erfindung besteht somit darin, eine optische Fehlerinspektionsvorrichtung der eingangs genannten Gattung zu schaffen, mit der sowohl eine Erkennung der Fehlerart und eine Bewertung der Fehlergröße möglich ist als auch eine Bewertung der Fehlerlage innerhalb des Materials.

Zur Lösung dieser Aufgabe sieht die Erfindung nach einer ersten Ausführungsform vor, daß die Fahrstrahlebene senkrecht auf den Oberflächen des Materials steht und die Fahrstrahlen schräg auf die Oberflächen des Materials auftreffen.

Hierbei ist insbesondere vorgesehen, daß der Einfallswinkel $\alpha$ der Fahrstrahlen zwischen 3 und $30^\circ$, insbesondere 5 bis $20^\circ$ und vorzugsweise insbesondere bei etwa $10^\circ$ liegt.

Insbesondere kann die Fehlerlage bzw. Fehlerhöhe innerhalb des Materials dadurch vorteilhaft bestimmt werden, daß das von einem das reflektierte Licht empfangenden Photoempfänger gebildete Videosignal in bezug auf Amplitudenhöhe und -abstände ausgewertet wird.

Für diese Auswertung ist es besonders vorteilhaft, wenn die Unterseite des Materials reflektierend beschichtet ist.

Die Aussage über Fehlergröße, Fehlerart und Fehlerhöhe kann weiter dadurch gefördert werden, daß bei transparentem Material auch im Durchlicht eine Photoempfangsanordnung vorgesehen ist und auch das von dieser abgegebene Videosignal in bezug auf Amplitudenhöhe und -abstände ausgewertet wird, wobei die im Durchlicht und in Reflexion erhaltenen Videosignale ebenfalls in Vergleich gesetzt werden.

Eine weitere Lösung der Erfindung kennzeichnet sich dadurch, daß die Fahrstrahlebene schräg zu den Oberflächen des Materials steht.

Hierbei ist insbesondere vorgesehen, daß der Winkel der Fahrstrahlebene relativ zur Senkrechten auf den Oberflächen des Materials zwischen 3 und $30^\circ$, insbesondere 5 bis $20^\circ$ und vorzugsweise bei etwa $10^\circ$ liegt.

Auch hier ist eine zusätzliche Fehlerlagenbestimmung mit einem zweiten, in Transmission arbeitenden Photoempfänger zweckmäßig.

In allen Fällen wird das Material im allgemeinen senkrecht zur Abtastlinie derart vorgeschoben, daß eine ununterbrochene zeilenförmige Abtastung beider Oberflächen des Materials gewährleistet ist.

Da erfindungsgemäß bewußt die Einfallsrichtung des Abtaststrahls gegen das Lot auf dem Gegenstand auf das im wesentlichen mit planparallelen Oberflächen versehene, transparente Material merklich von Null verschieden gewählt ist, sind der einfallende und der reflektierte Abtaststrahl oberhalb der unteren Oberfläche des Materials optisch getrennt. Das führt zu einer Fehlersignalverbreiterung oder zu einer Entstehung eines charakteristischen Fehler-Doppelsignals in einem Reflexionsempfänger. Diese Fehlersignalverbreiterung kann bei Korrelation mit dem gleichzeitig auftretenden Fehlersignal in einem Transmissionsempfänger (bei unbeschichtetem Material) so ausgewertet werden, daß daraus die Fehlerlage im Gegenstand abgeleitet werden kann.

Unter günstig gewählten Voraussetzungen (Verhältnis des Einfallswinkels zur Materialdicke und der gesuchten Fehlergröße) führt die Aufspaltung von einfallendem und reflektiertem Abtaststrahl auch zu einem charakteristischen Fehler-Doppelsignal im Reflexionsempfänger. In diesem Fall kann auch die alleinige Auswertung des Fehler-Doppelsignals zu einer Bestimmung der Höhe des Fehlers im Material herangezogen werden. Das ist insbesondere interessant bei der Inspektion einseitig beschichteter Materialien.

Schließlich ist es auch möglich, daß mit einem senkrecht auf die Oberfläche auftreffenden, innerhalb einer zumindest annähernd senkrecht auf der Oberfläche stehenden Fahrstrahlebene gearbeitet wird, indem auf der Unterseite des Materials ein Beugungsgitter angeordnet ist und eine Photoempfangsanordnung innerhalb einer Beugungsordnung, vorzugsweise der ersten und/oder zweiten Beugungsordnung des zurückgeworfenen Lichtes angeordnet ist.

Die Erfindung wird im folgenden beispielsweise anhand der Zeichnung beschrieben; in dieser zeigt:

Fig 1 eine schematische Ansicht einer erfindungsgemäßen optischen Fehlerinspektionsvorrichtung in Vorschubrichtung des Materials,

Fig 2 eine schematische Darstellung des von der Photoempfangsanordnung der Vorrichtung nach Fig. 1 abgegebenen Videosignals im Falle eines in der oberen Oberfläche liegenden Fehlers, und zwar als Amplituden-Zeitdiagramm,

Fig 3 eine schematische Ansicht der Oberflächeninspektionsvorrichtung nach Fig. 1, wobei jedoch ein Fehler in der unteren Oberfläche des Materials angenommen ist,

Fig 4 das bei einem Fehler nach Fig. 3 erhaltene Videosignal, als Amplituden-Zeitdiagramm,

Fig 5 eine Weiterbildung der optischen Fehlerinspektionsvorrichtung nach den Fig. 1 und 3 durch eine in Transmission arbeitende Photoempfangsanordnung,

Fig 6 das von der in Reflexion arbeitenden Photoempfangsanordnung nach Fig. 5 abgegebene Videosignal als Amplituden-Zeitdiagramm,

Fig 7 das von der in Transmission arbeitenden Photoempfangsanordnung nach Fig. 5 abgegebene Videosignal als Amplituden-Zeitdiagramm,

Fig 8 eine schematische Ansicht einer nur in Reflexion arbeitenden optischen Fehlerinspektionsvorrichtung gemäß der Erfindung in Anwendung bei einem mit einer reflektierenden Beschichtung an der unteren Oberfläche versehenen transparenten Material,

Fig 9 das mit der in Reflexion arbeitenden Photoempfangsanordnung der Fehlerinspektionsvorrichtung nach Fig.8 erhaltene Videosignal als Amplituden-Zeitdiagramm,

Fig 10 eine weitere Ausführungsform einer erfindungsgemäßen optischen Fehlerinspektionsvorrichtung mit schräg auf den Oberflächen des Materials stehender Fahrstrahlebene,

Fig 11 eine dreidimensionale perspektivische Darstellung der mit der in Reflexion arbeitenden Photoempfangsanordnung der Fehlerinspektionsvorrichtung nach Fig.10 erhaltenen Videosignale, wenn das Material entlang der Abtastlinie vom Fahrstrahl abgetastet und senkrecht zu dieser vorgeschoben wird,

Fig. 12 eine weitere Ausführungsform einer erfindungsgemäßen optischen Fehlerinspektionsvorrichtung mit senkrecht auf die Oberfläche des Materials auftreffenden Fahrstrahlen und einem an der Unterseite des Materials angeordneten Beugungsgitter,

Fig. 13 das bei einer Anordnung eines Defektes nach Fig. 12 erscheinende Fehler-Videosignal als Amplituden-Zeitdiagramm,

Fig. 14 ein Blockschaltbild für eine mit einem Photoempfänger arbeitende Reflexions-Photoempfangsanordnung, wie sie beispielsweise in den Fig. 1, 8 und 12 dargestellt ist,

Fig. 15 ein Blockschaltbild einer mit einem in Reflexion und einem in Transmission arbeitenden Photoempfänger versehene Ausführungsform, wie sie in Fig. 5 gezeigt ist,und

Fig. 16 ein Blockschaltbild für eine Auswerteelektronik, die bei der mit einem Photoempfänger mit Reflexion arbeitenden Ausführungsform nach Fig. 10 angewendet werden kann.

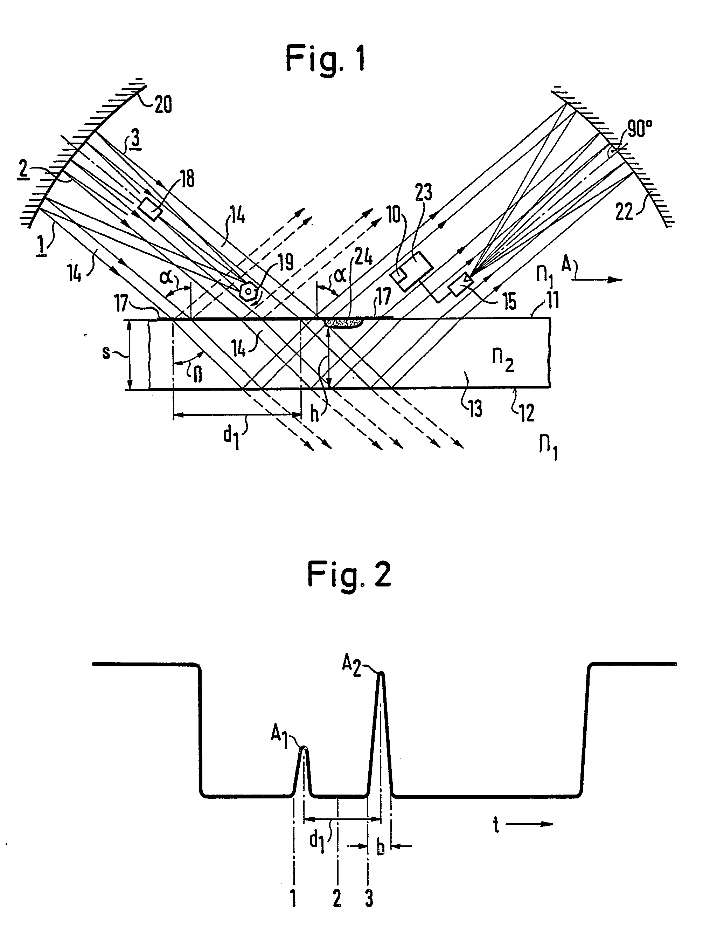

Nach Fig. 1 schickt ein nur schematisch angedeuteter Laser 18 einen scharfgebündelten Lichtstrahl auf ein Spiegelrad 19, das im Brennpunkt eines streifenförmigen Hohlspiegels 20 angeordnet ist, welcher auf diese Weise einen Fahrstrahl 14 erzeugt, der bei Drehung des Spiegelrades 19 in Richtung des Pfeiles parallel zu sich selbst verschoben wird, so daß er nacheinander die beispielsweise in Fig. 1 wiedergegebenen Positionen 1, 2 bzw. 3 einnimmt. Die optische Abtastanordnung 18, 19, 20 ist derart zu den beiden parallel zueinander verlaufenden Oberflächen 11, 12 eines transparenten Materials 13 geneigt, daß zwar die mit der Zeichnungsebene der Fig.1 übereinstimmende Fahrstrahlebene senkrecht auf dem Material 13 steht, die Fahrstrahlen 14 jedoch unter einem Einfallswinkel $\alpha$ von beispielsweise 10° auf die obere Oberfläche 11 des Materials 13 auftreffen. Beim Drehen des Spiegelrades 19 verschiebt sich der Fahrstrahl 14 zyklisch innerhalb der Fahrstrahlebene und erzeugt dabei auf der oberen Oberfläche 11 des Materials 13 eine in Fig. 1 angedeutete Abtastlinie 17. Tatsächlich handelt es sich um einen Lichtfleck, der die obere Oberfläche 11 periodisch wiederholt in der Abtastrichtung A überstreicht, so daß bei schnellem Umlauf des Spiegelrades 19 der Eindruck einer durchgehenden Abtastlinie 17 erzeugt wird.

Unter dem Reflexionswinkel $\alpha$ ist eine Photoempfangsanordnung vorgesehen, die aus einem entsprechend ausgebildeten streifenförmigen Hohlspiegel 22 besteht, in dessen Brennpunkt sich ein Photoempfänger 15 befindet, der an eine Auswerteelektronik 23 angeschlossen ist.

Es handelt sich also bei der Anordnung nach Fig.1 um eine telezentrische Licht-Abtast-Empfangsanordnung mit schrägem Laserstrahleinfall entlang der. Abtastlinie 17. In die Photoempfangsanordnung 15, 22 gelangt sowohl das an der oberen Oberfläche 11 als auch das an der unteren Oberfläche 12 des Materials 13 reflektierte Licht.

Im Bereich der oberen Oberfläche 11 ist ein Fehler 24 angenommen, der absorbierende und/oder lichtstreuende Eigenschaften besitzt.

Die Vorschubrichtung des Materials steht senkrecht auf der Zeichenebene der Fig. 1.

Im Verlaufe der Abtastbewegung des Fahrstrahls 14 durchläuft dieser nacheinander die beispielsweise dargestellten Positionen 1, 2 bzw. 3.

In der Position 1 beginnt der von der unteren Oberfläche 12 reflektierte Laserstrahl den Fehler 24 zu erfassen. Der reflektierte Laserstrahl wird also von dem Fehler 24 zunehmend absorbiert. Im zugehörigen Videosignal nach Fig. 2 ist dieser Zeitpunkt mit 1 bezeichnet.

In der Position 2 liegt der Fahrstrahl 14 gerade so, daß weder der von der oberen Oberfläche 11 noch der von der unteren Oberfläche 12 reflektierte Laserstrahl den Fehler 24 erfaßt. Dies entspricht der Position 2 im in Fig. 2 wiedergegebenen Videosignal.

In der Position 3 schließlich beginnt der einfallende Fahrstrahl 14 den Fehler 24 zu erfassen. Der Fehler beeinflußt direkt den Einfallsstrahl, so daß gleichzeitig der von der oberen Oberfläche 11 und der von der unteren Oberfläche 12 reflektierte Strahl beeinflußt werden. Das führt zu einem stärkeren Videosignal, wie es in Fig. 2 bei der Position 3 wiedergegeben ist.

Die Breite b beider Fehlerimpulse im Videosignal nach Fig.2 ist nahezu gleich bei angenommenem nahezu gleichen Laserstrahldurchmesser von einfallendem und refllektiertem Strahl. Die Breite b entspricht der Summe aus Laserstrahldurchmesser und Fehlerdurchmesser entlang der Abtastlinie 17.

Der Unterschied der Amplitudenhöhen hängt ab vom Verhältnis der Strahlintensitäten vom reflektierten Strahl an der oberen Oberfläche 11 zum reflektierten Strahl an der unteren Oberfläche 12.

Der Abstand $d_1$ der beiden Fehlerimpuls-Maxima in Fig.2 (das entspricht auch dem Abstand beider Fehlerimpuls-Anfänge) hängt nur ab vom Einfallswinkel $\alpha$ des Fahrstrahls 14, von der Dicke s des Materials und der Höhe h des Fehlers 24 im Material 13, d.h. vom Abstand des Fehlers 24 von der unteren Oberfläche 12 des Materials 13 sowie vom Brechungsindex $n_2$ des Materials 13 im Verhältnis zum Brechungsindex $n_1$ der Umgebung.Aus dem Abstand $d_1$ läßt sich die Fehlerhöhe h nach der folgenden Formel bestimmen:

$d_1 = 2h \cdot \tan \beta$ \quad (1)

$$\text{mit} \quad \frac{\sin \alpha}{\sin \beta} = \frac{n2}{n_1} \qquad (\text{Brechungsgesetz})$$

$d_1$ kann entweder aus der Zeit auf der Abszisse des Amplituden-Zeitdiagramms errechnet werden, sofern nicht die t-Achse, was zweckmäßig ist, von vornherein als vom Fahrtrahl 14 entlang der Abtastlinie 17 zurückgelegter Weg geeicht ist (vgl. Fig. 1 und 2).

Der Abstand $d_1$ wird zu einem Maximum, wenn sich der Fehler 24 - wie in Fig. 1 dargestellt - an der oberen Oberfläche 11 des Materials 13 befindet. In diesem Fall gilt also:

h = s.

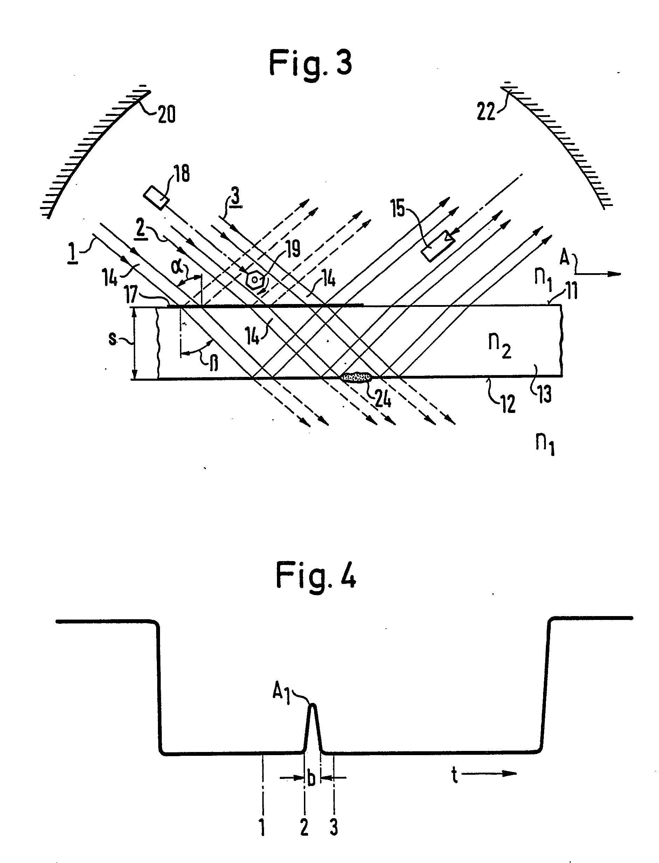

Dieser Abstand $d_1$ wird zu 0, wenn sich der Fehler 24 an der unteren Oberfläche 12 befinden würde und

h = 0

gilt. Es tritt dann nur ein Fehlerimpuls im Videosignal auf. Dieser Fall ist in den Fig. 3 und 4 angedeutet.

Erfindungsgemäß kann durch das Auftreten eines Fehlerdoppelimpulses innerhalb des maximal möglichen Abstandes $d_1$ auf einen Fehler oberhalb der unteren Oberfläche 12 geschlossen werden. Die Feststellung des Doppelimpulses wird erhärtet durch das charakteristische Amplitudenverhältnis $A_1$ zu $A_2$ bei Fehlern auf der oberen Oberfläche 11 und durch die gemeinsame im wesentlichen gleiche Fehlerimpulsbreite b. Die Fehlerauswertung kann in der Auswerteelektronik 23 erfindungsgemäß nach der oben angegebenen Formel (1) vorgenommen werden, wobei durch eine einfache Rechenschaltung 10 aus der Größe $d_1$ und dem bekannten Winkel $\alpha$ (bzw. $\beta$ ) die Fehlerhöhe h bestimmt werden kann.

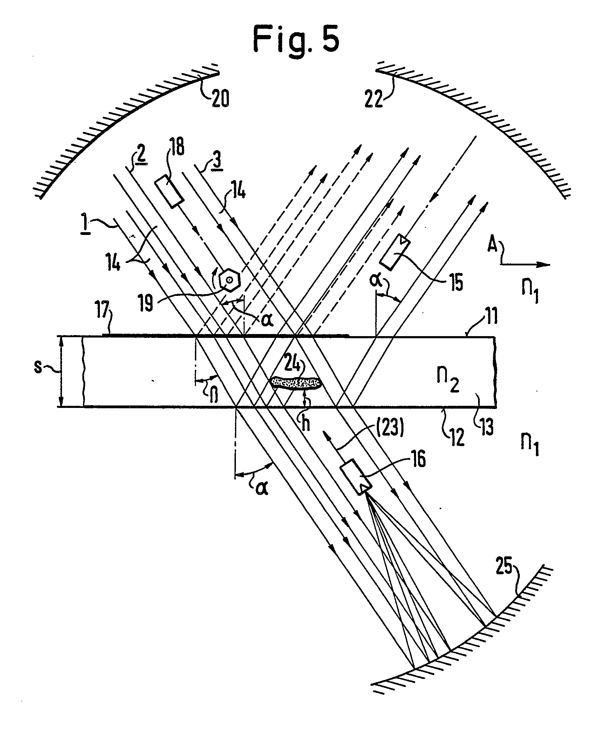

Mit der vergleichsweise einfachen Oberflächeninspektionsvorrichtung nach den Fig. 1 bis 4 können unter Umständen bei sehr großflächigen Fehlern und einem sehr geringen Abstand des Fehlers von der unteren Oberfläche 12 Probleme auftreten. Um dem entgegenzuwirken, kann gemäß Fig. 5 zweckmäßig auch noch unterhalb des Materials 13 eine weitere Photoempfangsanordnung mit einem streifenförmigen Hohlspiegel 25 und einem in dessen Brennpunkt angeordneten weiteren Photoempfänger 16 vorgesehen sein, der ebenfalls an die in Fig.1 dargestellte Auswerteelektronik 23 angeschlossen ist und in Transmission arbeitet.

Sendung und Empfang in Reflexion sind bei dem Ausführungsbeispiel nach Fig. 5 entsprechend wie bei der Ausführungsform nach Fig. 1 ausgebildet.

Der Fehler 24 ist hier in einem relativ geringen Abstand h von der unteren Oberfläche 12 angenommen.

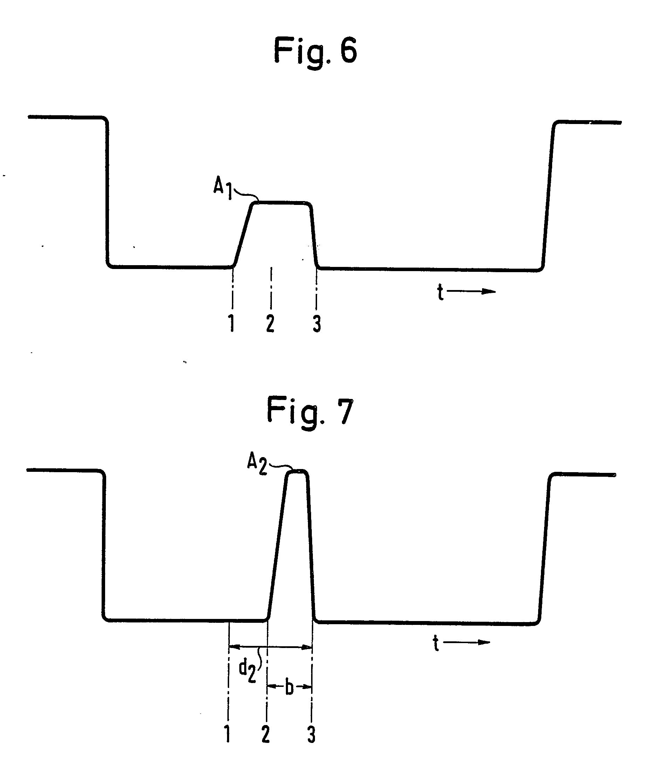

Befindet sich der Fahrstrahl 14 in der Position 1, so sehen die Videosignale des in Reflexion arbeitenden Empfängers und des in Transmission arbeitenden Empfängers so aus, wie das bei "1" in den Fig. 6 und 7 angedeutet ist. Im Reflexionsempfänger 15 beginnt hier bereits ein Fehlersignal aufzutreten, während im Transmissions-Empfänger 16 nach Fig. 7 noch keine Reaktion im Videosignal erscheint.

Befindet sich der Fahrstrahl 14 dann in der Position 2, so hat der Einfallsstrahl im Gegenstand den Fehler 24 erreicht. Das Fehlersignal des Reflexionsempfängers 15 nach Fig. 6 ist bereits maximal, und die Amplitude $A_1$ hängt vom Intensitätsverhältnis zwischen dem an der oberen Oberfläche 11 und dem an der unteren Oberfläche 12 reflektierten Abtaststrahl ab. Im Transmissions-Empfänger 16 beginnt nach Fig.7 das Fehlersignal gerade zu erscheinen.

Der einfallende Laserstrahl wird in der Position 3 gerade nicht mehr vom Fehler 24 beeinflußt. In beiden Empfängern ist das Fehlersignal gemäß den Fig. 6 und 7 wieder auf 0 zurückgefallen.

Die Breite b des Fehlerimpulses im Videosignal des Transmissions-Empfängers (Fig. 7) entspricht der Summe aus dem Strahldurchmesser und dem Fehlerdurchmesser entlang der Abtastlinie 17.

Die Breite $d_2$ des Fehlersignals im Videosignal des Reflexionsempfängers nach Fig. 6 entspricht der Summe aus dem Fehlerdurchmesser entlang der Abtastlinie 17 und der Länge zwischen dem Ende des einfallenden Fahrstrahls 14 und dem Anfang des an der unteren Oberfläche reflektierten Strahls entlang der Abtastlinie 17 an der jeweiligen Fehlerhöhe h.

Die Länge der Differenz der beiden Fehlersignale $(d_2-b)$ hängt nur ab vom Einfallswinkel $\alpha$ (bzw. $\beta$) des Fahrstrahls und von der Fehlerhöhe h im Gegenstand.

Die Differenz $(d_2-b)$ wird 0, wenn der Fehler 24 sich an der unteren Oberfläche 12 des Materials 13 befindet, also $h=0$ gilt. In diesem Fall haben die Fehlerimpulse in beiden Empfangskanälen die Breite b. Die Differenz $(d_2-b)$ wird maximal, wenn sich der Fehler 24 an der oberen Oberfläche 11 des Materials befindet, also gilt $h=s$. Das Maximum der Differenz hängt von der Dicke s des Materials ab.

Durch die elektronische Berechnung der Differenz $(d_2-b)$ in der Rechenschaltung 10 der Auswerteelektronik 23 kann nun neben der Fehlerbreite b in Richtung der Abtastlinie 17 auch die Fehlerhöhe h eindeutig bestimmt werden, und zwar erfindungsgemäß nach der Formel:

$$d_2-b = 2h \cdot \beta; \quad (2)$$

$$\text{mit} \quad \sin \beta = \frac{n_1}{n_2} \cdot \sin \alpha \quad \text{(Brechungsgesetz)}$$

Kommt es im Reflexions-Empfänger zu einem Fehlerdoppelsignal, so ist der Zeitpunkt und die Breite des zweiten Teils des Doppelsignals aus dem Reflexions-Empfänger identisch mit dem Signal vom Transmissions-Empfänger. In diesem Fall kann erfindungsgemäß der erste Teil des Doppelsignals dem zweiten Teil eindeutig zugeordnet werden. Damit ist die Festlegung von $(d_2-b)$ auf ähnliche Weise ebenfalls eindeutig möglich.

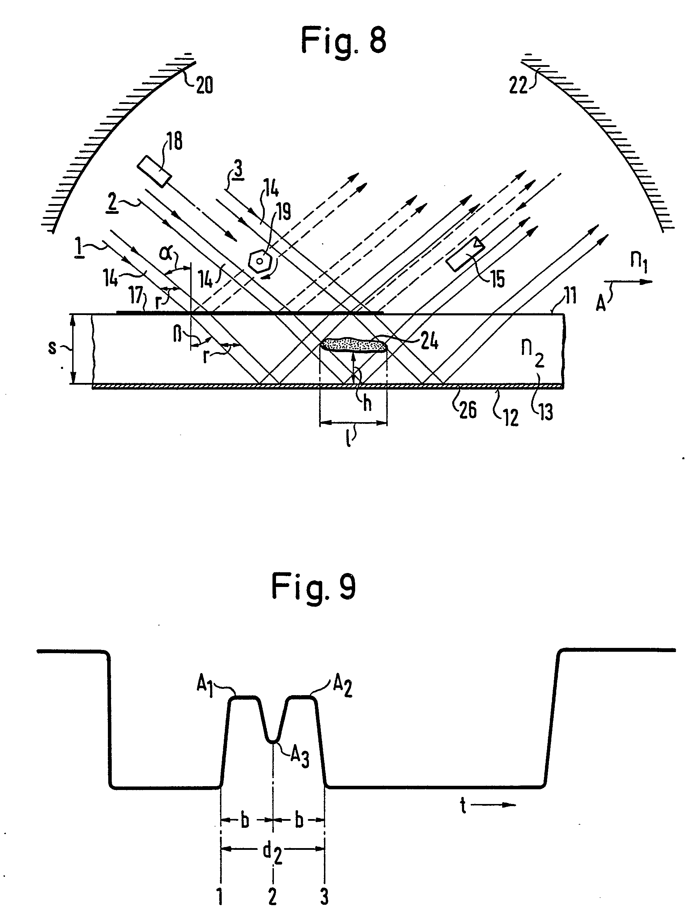

In Fig. 8 ist wieder eine Anordnung gezeigt, die nur in Reflexion arbeitet. Im Gegensatz zu den Verhältnissen bei den vorangehenden Ausführungsbeispielen ist hier ein Material 13 angenommen, dessen untere Oberfläche 12 mit einer reflektierenden undurchsichtigen Beschichtung 26 versehen ist. Der Fehler 24 ist wieder absorbierend und/oder streuend angenommen und befindet sich innerhalb des Materials 13 im Abstand h von der mit der Beschichtung 26 versehenen unteren Oberfläche 12.

Wenn der Fahrstrahl 14 sich in der Position 1 befindet, beginnt der von der unteren Oberfläche 12 an der Beschichtung 26 reflektierte Fahrstrahl den Fehler 24 zu erfassen. In dem zugehörigen Videosignal nach Fig. 9 ist dieser Zeitpunkt mit "1" bezeichnet.

Bei der Position 2 liegt der Fehler 24 gerade zwischen dem einfallenden Fahrstrahl 14 im Material und dem von der unteren Oberfläche 12 reflektierten Strahl. Der Fehler beeinflußt nach Fig. 9 sowohl den einfallenden als auch den reflektierten Strahl im Material 13 ein wenig.

Gelangt der Fahrstrahl 14 schließlich in die Position 3, so wird der Strahl im Material 13 zu diesem Zeitpunkt gerade nicht mehr vom Fehler 24 beeinflußt.

Die Amplitude $A_1$ hängt ab vom Intensitätsverhältnis zwischen dem an der oberen Oberfläche 11 reflektierten Fahrstrahl 14 und dem an der unteren Oberfläche 12 reflektierten Strahl. Insbesondere wird $A_1$ groß, wenn die Intensität des von der unteren Oberfläche 12 reflektierten Strahls viel größer ist als die Intensität des von der oberen Oberfläche 11 reflektierten Strahls. Das ist beispielsweise bei einer spiegelnden Beschichtung 26 der Fall.

Die Amplitude $A_2$ entspricht $A_1$ (es gilt also: $A_1 = A_2$), wenn sich der Fehler 24 im Material 13 befindet. Liegt der Fehler 24 an der oberen Oberfläche 11, beeinflußt er also auch den an der oberen Oberfläche reflektierten Strahl, dann gilt

$A_2 > A_1$.

Es entsteht dann ein charakteristisches Amplitudenverhältnis $A_1 : A_2$ entsprechend Fig. 9.

Die Amplitude $A_3$ hängt davon ab, inwieweit der Fehler 24 in der Position 2 sowohl den einfallenden als auch den reflektierten Laserstrahl im Material 13 abdeckt. Es gilt

$A_3 = A_1$,

wenn der Fehler 24 die Hälfte oder mehr des einfallenden und reflektierten Laserstrahls gleichzeitig abdeckt. Dann ist kein Doppelimpuls mehr registrierbar. Die Amplitude $A_3$ ist 0, wenn in der Position 2 des Fahrstrahls 14 weder der einfallende noch der reflektierte Strahl im Material 13 vom Fehler 24 beeinflußt wird. Die beiden Anteile des Fehler-Doppelsignals sind dann getrennt.

Die Breite b beider Anteile des Fehler-Doppelsignals ist gleich. b entspricht der Summe aus dem Fehlerdurchmesser entlang der Abtastlinie 17 und der Abtaststrahlbreite in Abtastlinienrichtung.

Die Größe $d_2$ (Breite des Fehler-Doppelsignals) entspricht der Summe $r$ aus dem Fehlerdurchmesser entlang der Abtastlinie 17 und der Länge zwischen dem Anfang des an der unteren Oberfläche 12 reflektierten Laserstrahls und dem Ende des einfallenden Laserstrahls im Material 13 an der jeweiligen Fehlerhöhe h im Material. Wenn r die Abtaststrahlbreite entlang der Abtastlinie 17, 1 die Fehlerlänge in Richtung der Abtastlinie 17 ist und $b = r + 1$, dann läßt sich die Fehlerhöhe erfindungsgemäß nach der folgenden Beziehung berechnen:

$$d_2 = b +_1 2h \cdot \tan \beta \qquad (3)$$

bzw.

$$d_2 - b = 2h \cdot \tan \beta _{n_1} \qquad (4)$$

mit $\sin \beta = \dfrac{n_1}{n_2} \sin \alpha$ (Brechungsgesetz)

sowie $n_1$ und $n_2$ Weil r und $\alpha$/bekannt sind und $d_2$ und b jeweils durch die erfindungsgemäße Messung bestimmt werden können, kann damit die Fehlerhöhe h eindeutig festgelegt werden. Dies geschieht innerhalb der Auswerteelektronik 23 durch die Rechenschaltung 10 (Fig.1). $d_2 - b$ wird maximal für $h = s$. $d_2 - b$ wird 0 (d.h. $d_2 = b$, kein Doppelsignal) für $h = 0$.

Die Absolutwerte der Fehleramplituden hängen in allen Fällen von der Absorptions- bzw. Streuwirkung der Fehler ab. Die Einfallsrichtung der Abtaststrahlen kann auch spiegelbildlich zum Einfallslot erfolgen, d.h., daß $\alpha$ negativ sein kann.

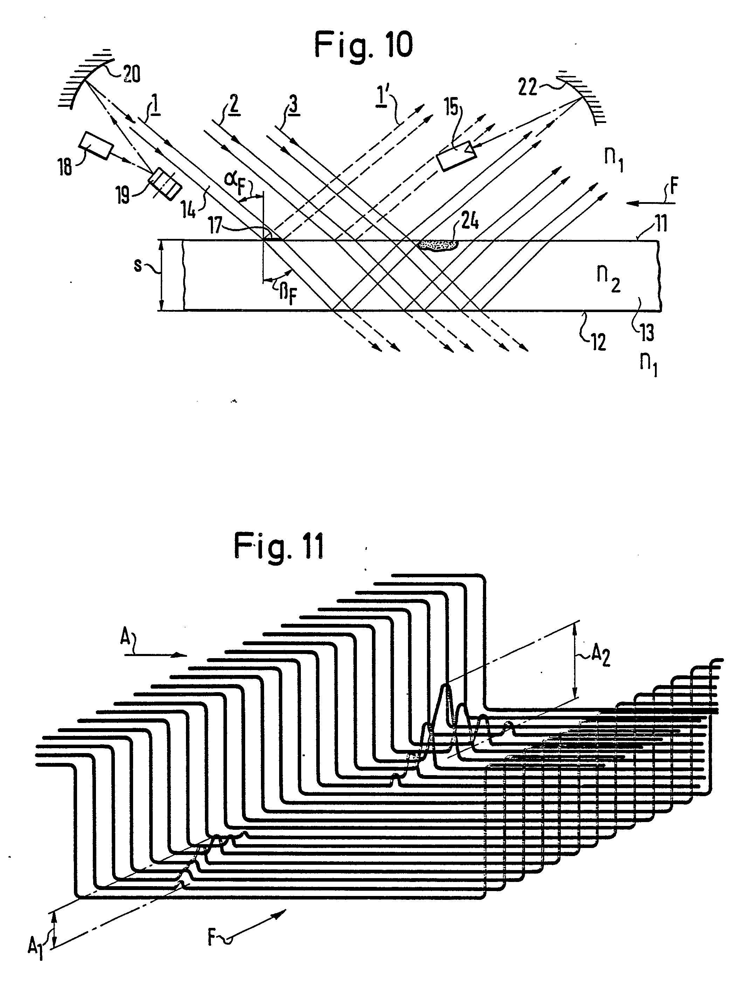

Beim Ausführungsbeispiel nach Fig. 10 steht die Abtastlinie 17 senkrecht auf der Zeichenebene. Hier schließt die Fahrstrahlebene einen Winkel $\alpha_F$ mit dem Lot auf der oberen Oberfläche 11 des Materials 13 ein. Die Laserabtastvorrichtung 18,19,20 ist wieder telezentrisch ausgebildet.

Die Vorschubrichtung des Materials erfolgt wieder senkrecht zur Abtastlinie 17, d.h. in Fig. 10 in Richtung des Pfeiles F.

Die Positionen 1, 2 und 3 der Fahrstrahlebene sind zu Veranschaulichungszwecken nebeneinander dargestellt, während das Material 13 als feststehend angenommen ist. Tatsächlich bewegt sich das Material 13 in Richtung des Pfeiles F und die Fahrstrahlebene steht beispielsweise in der Position 1 nach Fig. 10 fest, wobei jedoch der Fahrstrahl 14 senkrecht zur Zeichenebene der Fig. 10 in Richtung der Abtastlinie 17 seine zyklisch-periodische Abtastbewegung durchführt. Die Sende-und Empfangsanordnung 18,19,20 bzw. 15,22 sind in Fig. 10 nur schematisch angedeutet.

Wenn die Relativpositionen der Fahrstrahlebene und des Materials 13 nacheinander die Positionen 1, 2 bzw. 3 einnehmen, erfolgt eine ähnliche Beeinflussung des in Reflexion erhaltenen Videosignals wie beim Ausführungsbeispiel nach Fig. 1. Auch die Signalverarbeitung in der Auswerteelektronik 23 kann analog vorgenommen werden.

Fig. 11 zeigt die beim Ausführungsbeispiel nach Fig.10 während des Vorbeilaufens des Materials 13 an der Abtastlinie 17 bei den aufeinanderfolgenden Abtastzyklen auftretenden Videosignale. In Materialvorschubrichtung F gesehen werden demgemäß ähnliche Videosignale ($A_1$, $A_2$) erhalten wie bei der Abtastmethode nach Fig. 1, so daß auch eine entsprechende Auswertung möglich ist.

Wenn gemäß dem Ausführungsbeispiel nach den Fig. 10, 11 die Fahrstrahlebene unter dem Winkel $\alpha_F$ gegen das Lot auf dem Material 13 geneigt ist, dann wird im allgemeinen der an der oberen Oberfläche 11 reflektierte Strahl von dem an der unteren Oberfläche 12 reflektierten Strahl optisch getrennt (siehe den Strahl 1', der am Hohlspiegel 22 vorbeiläuft). Es kann dann auch so gemessen werden, daß nur der an der unteren Oberfläche 12 reflektierte Strahl empfangen wird. Das hat ausschließlich Einfluß auf die Fehleramplituden $A_1$ bis $A_3$. An der Feststellbarkeit der Fehlerhöhe h ändert sich aber prinzipiell nichts.

Beim Ausführungsbeispiel nach Fig. 10 ist grundsätzlich auch die Verwendung einer divergenten oder konvergenten Abtastvorrichtung denkbar. Der Einfluß der geringfügigen Änderung des Einfallswinkels α des Abtaststrahls gegen das Lot auf die Materialebene muß dann bei der elektronischen Auswertung in der Auswerteelektronik 23 mit berücksichtigt werden.

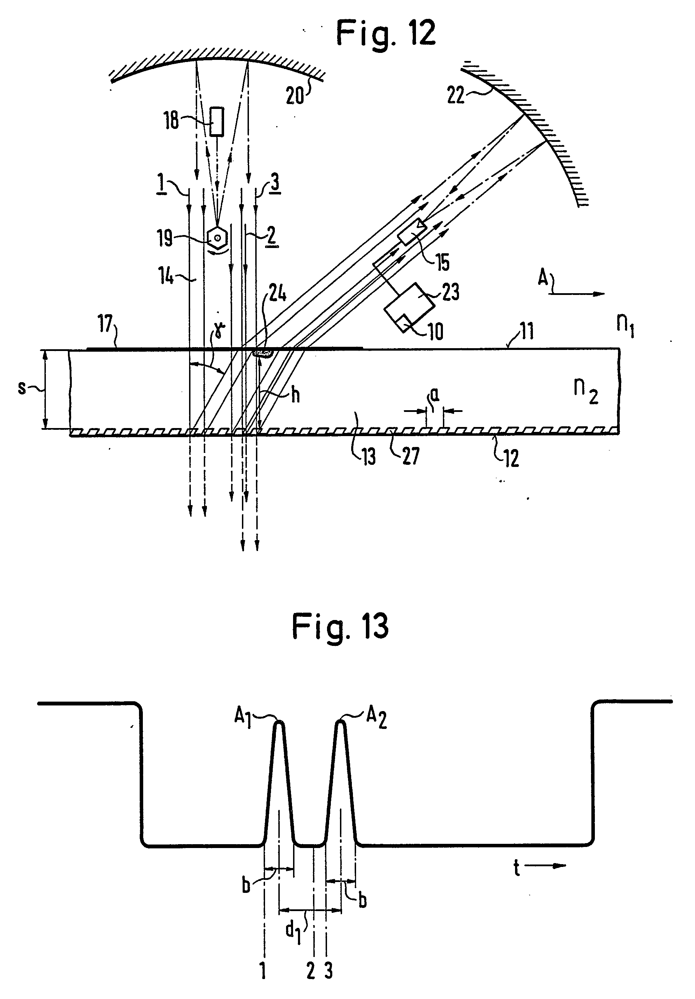

Nach Fig. 12 trifft ein Laser-Fahrstrahl 14 senkrecht auf die Oberfläche 11 des Materials 13 auf und vollführt entlang der in Richtung des Pfeiles A verlaufenden Abtastlinie 17 eine periodische Abtastbewegung. Nacheinander nimmt der Fahrstrahl 14 beispielsweise die Positionen 1, 2 bzw. 3 ein.

Auf der unteren Oberfläche 12 des Materials 13 ist ein optisches Beugungsgitter 27, z.B. ein Phasengitter in Form von Pit-Spuren einer CD-Platte angeordnet. Die Spurrichtung steht senkrecht auf der Zeichenebene. Fig. 12 zeigt demnach Querschnitte der Pit-Spuren.

Die wieder aus einem streifenförmigen Hohlspiegel 22 und einem Photoempfänger 15 bestehende Photoempfangsanordnung ist in der ersten Beugungsordnung des am Beugungsgitter 27 unter dem Winkel γ gebeugten Lichtes angeordnet. Vorzugsweise befindet sich die Photoempfangsanordnung 15, 22 in der ersten Beugungsordnung.

Dadurch, daß erfindungsgemäß in einer höheren als der nullten Beugungsordnung gemessen wird, ist das Empfangslicht von dem einfallenden Licht optisch getrennt.

Das Verhältnis der Lichtwellenlänge λ und der Spurabstand a des Beugungsgitters 27 sind erfindungsgemäß so gewählt, daß nur wenige diskrete, intensive und räumlich gut getrennte Beugungsordnungen auftreten und einer diskreten Beugungs ordnung, vorzugsweise der ersten Beugungsordnung, eine eigene Photoempfangsanordnung 15, 22 zugeordnet werden kann. Somit empfängt der Photoempfänger 15 nur das Licht einer Beugungsordnung und kein reflektiertes Licht. Dieses Verfahren arbeitet sowohl mit Beschichtung der Unterseite als auch ohne Beschichtung. Bei beschichteter Unterseite (insbesondere metallisierter Unterseite) ist die Empfangsintensität besser.

In Fig. 12 ist wieder ein Fehler 24 absorbierender oder streuender Natur an der Materialoberseite angenommen.

Wenn sich der Fahrstrahl 14 in Fig. 12 in der Position 1 befindet, beginnt der an der unteren Oberfläche 12 zurückgebeugte Lichtstrahl den Fehler 24 zu erfassen, und er wird vom Fehler 24 zunehmend absorbiert.

Im zugehörigen, in Fig. 13 wiedergegebenen Fehler-Videosignal ist dieser Zeitpunkt mit 1 bezeichnet.

Wenn der Fahrstrahl 14 die Position 2 in Fig. 12 erreicht, wird gerade weder der einfallende noch der zurückgebeugte Strahl vom Fehler 24 erfaßt. Das Videosignal nach Fig. 13 ist in dieser Position 2 ungestört.

In der Position 3 nach Fig. 12 beginnt der einfallende Fahrstrahl 14 den Fehler 24 zu erfassen. Dies entspricht der Position 3 im Videosignal.

Da die Photoempfangsanordnung 15, 22 nur zurückgebeugtes Licht empfängt, erscheinen beide Fehlerimpulse im Videosignal mit gleicher Amplitude, d.h. es gilt: $A_1 = A_2$.

Die Breite b beider Fehlerimpulse nach Fig. 13 ist nahezu gleich, sie entspricht der Summe aus dem Strahldurchmesser und dem Fehlerdurchmesser entlang der Abtastlinie 17.

Der Abstand $d_1$ beider Fehlerimpulsmaxima (das entspricht auch dem Abstand beider Fehlerimpuls-Anfänge) hängt nur ab vom Beugungswinkel γ und von der Defekthöhe h im Material 13. Im einzelnen gelten folgende Formeln:

$$a \cdot \sin \gamma = m \cdot \lambda \qquad (5)$$

Darin bedeutet m die Nummer der empfangenen Beugungsordnung.

Durch die vorstehende Formel ist < festgelegt.

Aus dem Abstand $d_1$ der beiden Fehlerimpulse $A_1$ und $A_2$ in Fig. 13 läßt sich die Fehlerhöhe nach der folgenden Formel berechnen:

$$d_1 = h \cdot \tan \gamma \qquad (6)$$

Der Abstand $d_1$ wird zu einem Maximum für h = s.

Dieser Abstand $d_1$ wird zu Null für h = 0. In diesem Fall befindet sich der Fehler an der unteren Oberfläche 12 des Materials 13.

Die Feststellung des Doppelimpulses ist hier besonders deutlich durch die gleichen Amplituden beider Einzelimpulse, durch die gemeinsame Fehlerimpulsbreite b und durch das Auftreten des Doppelimpulses innerhalb eines maximalen Abstandes

$$d_{max} < s \cdot \tan \gamma \qquad (7)$$

Aus dem Abstand $d_1$ kann auf die Höhe h des Defektes über der unteren Oberfläche 12 des Materials 13 geschlossen werden.

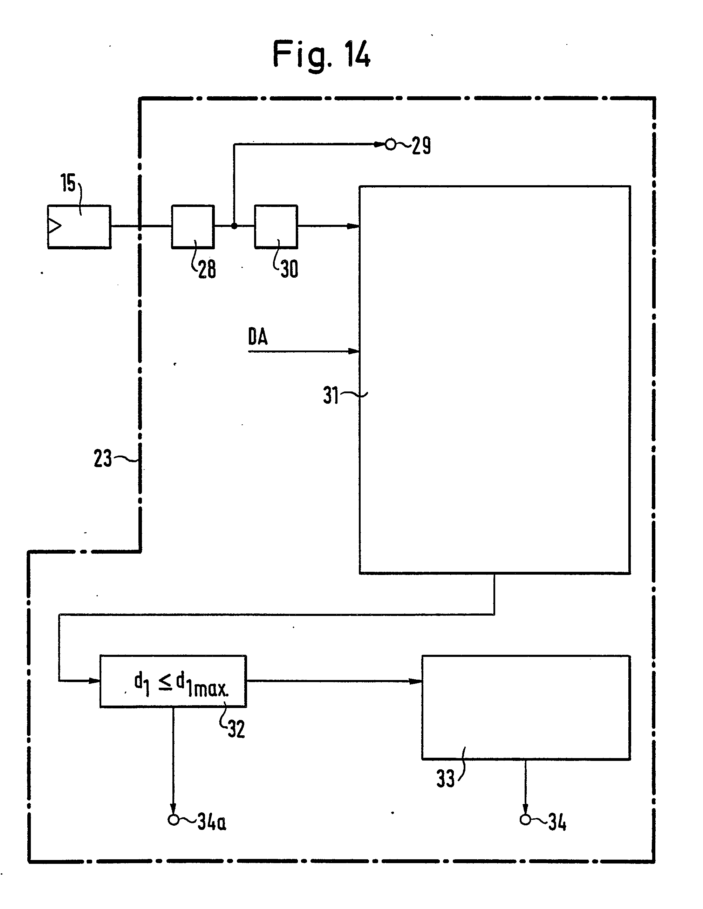

Fig. 14 zeigt ein Blockschaltbild für die Auswertung der vom Reflexions-Photoempfänger 15 nach Fig. 1 abgegebenen elektrischen Signale in der Auswerteelekronik 23.

Der Photoempfänger 15 ist über einen Hochpaß 28 zur Extraktion von Fehlerimpulsen und zur Datenreduktion an einen normalen Videoauswerteausgang 29 angeschlossen. Der Ausgang des Hochpaßfilters 28 liegt außerdem an einem Bandpaßfilter 30, dessen Frequenzumfang auf die größte zugelassene Frequenz abgestimmt ist, die einem kürzesten Fehlersignal entspricht, das durch die Breite des abtastenden Fahrstrahls 14 gegeben ist. Das Bandpaßfilter 30 bestimmt weiter die kleinste zugelassene Frequenz, die einem möglichen Doppelsignal mit größtmöglichem Impulsabstand entspricht. Außerdem besorgt das Bandpaßfilter 30 eine weitere Datenreduktion.

Dem Bandpaßfilter 30 folgt eine erste Auswertestufe 31, die der Bestimmung der Impulsamplituden sowie der Kontrolle des Amplitudenverhältnisses aufeinander folgender Impulse zwecks Datenreduktion dient. Weiter erfolgt hier die Bestimmung der Zeitabstände von Doppelimpulsen mit Hilfe eines DA-Impulses und des internen Rechentaktes. Der DA-Impuls wird beispielsweise von dem umlaufenden Spiegelrad 19 am Beginn jeder Abtastung der Abtastlinie 17 erzeugt. Es handelt sich hier also um das Startsignal für die interne Laufzeitmessung des Abtastlichtflecks entlang der Abtastlinie 17.

Außerdem erfolgt in der ersten Auswertestufe die Bestimmung von $d_1$ nach einer Tabelle programmierter, endlich vieler sinnvoller $d_1$-Werte.

Der Ausgang der ersten Auswertestufe 31 wird einer zweiten Auswertestufe 32 zugeführt, in welcher entschieden wird, ob $d_1$ kleiner oder gleich $d_{1\ max}$ ist. Im Falle, daß diese Beziehung verneint wird, erfolgt die Videoauswertung zweier Einzelimpulse am Ausgang 33.

Wird die Beziehung bejaht, bedeutet dies, daß ein Doppelimpuls vorliegt. Ein entsprechendes Ja-Signal wird an eine Zuordnungsstufe 33 gegeben, in der die Zuordnung des h-Wertes zum $d_1$-Wert nach Tabelle erfolgt. Die Zuordnungsstufe 33 stellt eine dritte Auswertestufe dar. Am Ausgang 34 wird der h-Wert für die Fehler-Klassifikation ausgewertet.

Die Auswerteelektronik 23 besteht also im wesentlichen aus den drei hintereinander geschalteten Auswertestufen 31, 32, 33.

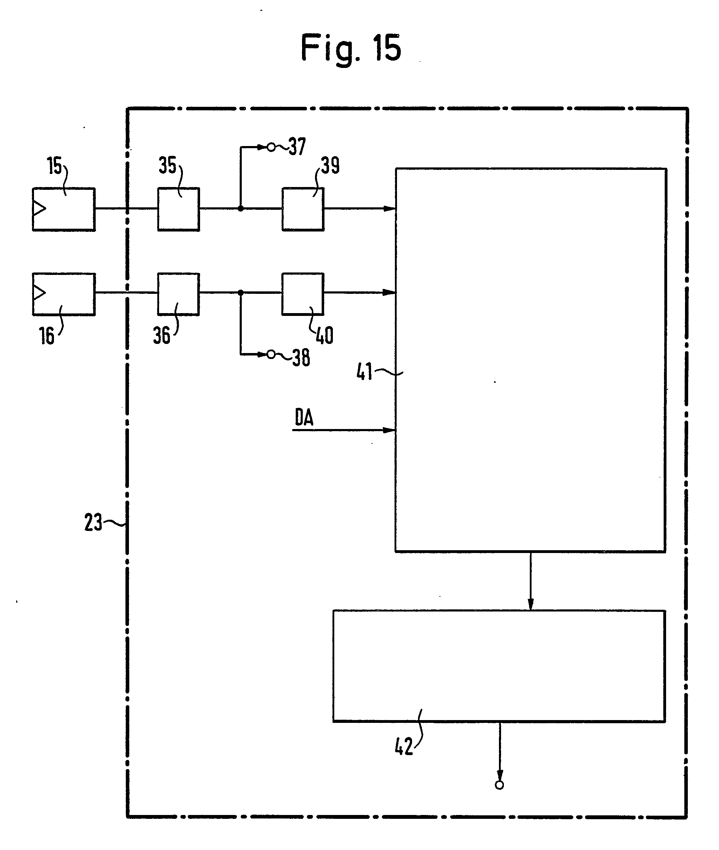

Fig. 15 zeigt eine Auswerteschaltung für eine Ausführungsform, wie sie beispielsweise in Fig. 5 mit einem ReflexionsPhotoempfänger 15 und einem Transmission-Photoempfänger 16 dargestellt ist.

Der Reflexionsempfänger 15 und der Transmissionsempfänger 16 sind nach Fig. 15 jeweils an einen Hochpaßfilter 35, 36 angeschlossen die an eine normale Videoauswertung 37, 38 angelegt sind.

Weiter sind die Ausgänge der Hochpaßfilter 35, 36 an Bandpaßfilter 39, 40 angelegt.

Die Hochpaßfilter 35, 36 dienen der Extraktion von Fehlerimpulsen und der Datenreduktion. In den Bandpaßfiltern 39, 40 entspricht die Größe zugelassener Frequenz einem kürzesten Fehlersignal und die kleinste zugelassene Frequenz dem längsten Fehlersignal, für das eine h-Bestimmung sinnvoll ist. Auf diese Weise wird die Anzahl der weitergeleiteten Daten erheblich reduziert.

Die Ausgänge der Bandpaßfilter 39, 40 sind an eine erste Auswertestufe 41 angelegt, der auch ein DA-Impuls zur Festlegung des Beginns jedes Abtastzyklus des Fahrstrahls 14 zugeführt ist.

In der ersten Auswertestufe erfolgt der Vergleich der Fehlerimpulse beider Empfänger und die Bestimmung der Größe $(d_2 - b)$, wobei vom Auftreten zeitgleicher Fehlerimpulsenden ausgegangen wird. Die Festlegung der Zeitpunkte der Impulsenden erfolgt mittels Amplitudenschwellen.

Sind zwei zeitgleiche Impulsenden an den Empfängern 15 und 16 gefunden worden, so werden rückwärts im Empfänger 15 alle Fehlerereignisse bis zum vorhergehenden zeitgleichen Impulsende als ein Fehlersignal betrachtet. Daraus wird dann der Wert $(d_2 - b)$ gebildet.

Der Ausgang der ersten Auswertestufe 41 wird an eine zweite Auswertestufe 42 angelegt, in der die Zuordnung von h-Werten zu $(d_2 - b)$-Werten nach Tabelle erfolgt.

Am Ausgang der zweiten Auswertestufe erfolgt die Berücksichtigung des h-Wertes für die Fehlerklassifikation.

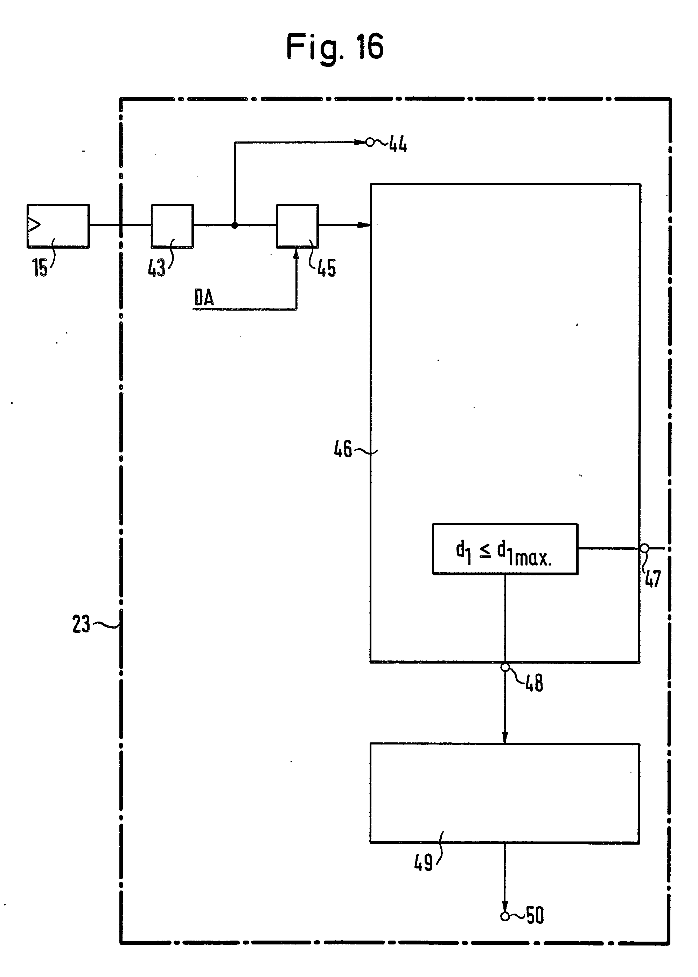

Das Ausgangssignal der Ausführungsform nach Fig. 10 kann mittels eines Blockschaltbildes nach Fig. 16 ausgewertet werden.

Das Ausgangssignal des Photoempfängers 15 wird über ein rekursives Filter 43 zum einen der normalen Videoauswertung 44 und zum anderen einem Längskorrelator 45 mit Bandpaßcharakter zugeführt, dem auch der DA-Impuls zur Festlegung des Beginns jedes Abtastzyklus zugeführt ist. Der Längskorrelator registriert und korreliert Fehlerimpulse, die bei nacheinander erfolgenden Abtastungen zum selben Zeitpunkt während der Abtastung auftreten, d.h. Fehlersignalen von Defekten in Materialvorschubrichtung. Die größte zugelassene Frequenz entspricht einem Fehlersignal während einer Abtastung. Die kleinste zugelassene Frequenz des Längskorrelators entspricht der Abtastlinienzahl eines möglichen Doppelsignals mit größtmöglichem Impulsabstand. Die Datenmenge wird durch den Längskorrelator 45 mit Bandpaßtcharakter wesentlich reduziert.

An den Längskorrelator 45 ist eine erste Auswertestufe 46 angeschlossen, in der mögliche Doppelimpulse erkannt und extrahiert werden. Es erfolgt die Bestimmung der Amplituden und die Kontrolle des Amplituden-Verhältnisses. Die Bestimmung von $d_1$ erfolgt nach Tabelle. Es erfolgt eine Entscheidung, ob die Beziehung $d < d_{1\ max}$ erfüllt ist oder nicht. Ist die Bedingung nicht erfüllt, so erscheint an einem Ausgang 47 ein Signal, welches die Videoauswertung zweier Einzelimpulse auslöst.

Ist die Bedingung erfüllt, so wird über einen Ausgang 48 ein Ja-Signal abgegeben, und in einer zweiten Auswertestufe 49 erfolgt die Zuordnung von h-Werten zu $d_1$-Werten nach Tabelle.

Am Ausgang 50 der zweiten Auswertestufe erfolgt die Berücksichtigung des h-Wertes für die Fehlerklassifikation.

Die Auswertestufen 46, 49 bilden zusammen die Auswerteelektronik 23.

## Ansprüche

1. Optische Fehlerinspektionsvorrichtung für die Erkennung von in einem vorzugsweise ebenen transparenten Platten- oder Blattmaterial endlicher Dicke vorhandenen Fehlstellen und von deren Lage zwischen den beiden Oberflächen, mit einer telezentrischen Licht-Abtast-Empfangsanordnung, welche das Material mit einem schräg auf die Oberfläche auftreffenden, innerhalb einer Fahrstrahlebene parallel zu sich selbst verschobenen Fahrstrahl zeilenweise abtastet und vom Material spiegelnd reflektiertes Licht empfängt und photoelektrisch auswertet,
dadurch **gekennzeichnet,**
daß die Fahrstrahlebene senkrecht auf den Oberflächen (11, 12) des Materials (13) steht und die Fahrstrahlen (14) schräg auf die Oberflächen (11, 12) des Materials (13) auftreffen, wobei zweckmäßigerwei-se der Einfallswinkel ($\alpha$) der Fahrstrahlen (14) zwischen 3 und 30°, insbesondere 5 bis 20° und vorzugsweise insbesondere bei etwa 10° liegt.

2. Vorrichtung nach Anspruch 1,
dadurch **gekennzeichnet,**
daß das von einer das reflektierte Licht empfangenden Photoempfangsanordnung (15, 22) gebildete Videosignal in bezug auf Amplitudenhöhen und -abstände ausgewertet wird und daß vorzugsweise auch im Durchlicht eine Photoempfangsanordnung (16, 25) vorgesehen ist und auch das von dieser abgegebene Videosignal in bezug auf Amplitudenhöhen und -abstände ausgewertet wird, wobei die im Durchlicht und in Refle xion erhaltenen Videosignale ebenfalls in Vergleich gesetzt werden, und/oder daß die Unterseite des Materials reflektierend beschichtet ist.

3. Optische Fehlerinspektionsvorrichtung für die Erkennung von in einem vorzugsweise ebenen transparenten Platten- oder Blattmaterial endlicher Dicke vorhandenen Fehlstellen und von deren Lage zwischen den beiden Oberflächen, mit einer telezentrischen Licht-Abtast-Empfangsanordnung, welche das Material mit einem schräg auf die Oberfläche auftreffenden, innerhalb einer Fahrstrahlebene parallel zu sich selbst verschobenen Fahrstrahl zeilenweise abtastet und vom Material spiegelnd reflektiertes Licht empfängt und photoelektrisch auswertet,
dadurch **gekennzeichnet,**
daß die Fahrstrahlebene schräg zu den Oberflächen (11, 12) des Materials (13) steht, wobei zweckmäßigerweise der Winkel der Fahrstrahlebene relativ zur Senkrechten auf den Oberflächen (11, 12) des Materials (13) zwischen 3 und 30°, insbesondere 5 bis 20° und vorzugsweise bei etwa 10° liegt.

4. Vorrichtung nach Anspruch 3,
dadurch **gekennzeichnet,**
daß das von einer das reflektierte Licht empfangenden Photoempfangsanordnung (15, 22) gebildete Videosignal in bezug auf Amplitudenhöhe und -abstände ausgewertet wird.

5. Vorrichtung nach einem der vorhergehenden Ansprüche,
dadurch **gekennzeichnet,**
daß das Material senkrecht zur Abtastlinie (17) vorgeschoben wird und/oder daß in der Auswerteelektronik (23) die Fehlerhohe (h) aus dem Einfallswinkel ($\alpha, \alpha_F$) und den Videosignal-Fehlerimpuls-Abständen und -Breiten ($d_1, d_2, b$) bestimmt wird.

6. Vorrichtung nach einem der vorhergehenden Ansprüche,
dadurch **gekennzeichnet,** daß die Auswerteelektronik (23) eine Rechenstufe (10) enthält, welche aus dem Abstand ($d_1$) zweier aufeinanderfolgender Videosignalfehlerimpulse ($A_1, A_2$) und dem Einfallswinkel ($\alpha, \alpha_F$) die Fehlerhohe (h) nach den Formeln

$$\frac{\sin (\alpha, \alpha_F)}{\sin (\beta, \beta_F)} = \frac{n_2}{n_1} \quad (\text{Brechungsgesetz})$$

9

und     $d_1 = 2h \cdot \tan(\beta, \beta_F)$

berechnet und eine entsprechende Anzeige liefert.

7. Vorrichtung nach einem der Ansprüche 2 bis 6,

dadurch **gekennzeichnet,** daß die Auswerteelektronik (23) eine Rechenstufe (10) enthält, welche die Differenz der Breite ($d_2$) des Videosignalfehlerimpulses vom in Reflexion arbeitenden Photoempfänger (15) und der Breite (b) des Videosignalfehlerimpulses vom in Transmission arbeitenden Photoempfänger (16) bildet und aus diesem mit dem Einfallswinkel ($\alpha, \alpha_F$) nach den Formeln

$$\frac{\sin(\alpha, \alpha_F)}{\sin(\beta, \beta_F)} = \frac{n_2}{n_1} \quad (\text{Brechungsgesetz})$$

und

$d_2 - b = 2h \cdot \tan(\beta, \beta_F)$

die Fehlerhöhe bestimmt.

8. Optische Fehlerinspektionsvorrichtung für die Erkennung von in einem vorzugsweise ebenen transparenten Platten- oder Bahnmaterial endlicher Dicke vorhandenen Fehlstellen und von deren Lage zwischen den beiden Oberflächen, mit einer telezentrischen Licht-Abtast-Empfangsanordnung, welche das Material mit einem senkrecht auf die Oberfläche auftreffenden, innerhalb einer zumindest annähernd senkrecht auf der Oberfläche stehenden Fahrstrahlebene parallel zu sich selbst verschobenen Fahrstrahl zeilenweise abtastet und vom Material zumindest teilweise zurückgeworfenes Licht empfängt und photoelektrisch auswertet,

dadurch **gekennzeichnet,**

daß auf der Unterseite des Materials (13) ein Beugungsgitter (27) angeordnet ist und eine Photoempfangsanordnung (15, 22) oberhalb des Materials (13) innerhalb einer Beugungsordnung, vorzugsweise der ersten und/oder zweiten Beugungsordnung des zurückgeworfenen Lichtes angeordnet ist, wobei insbesondere die Auswerteelektronik (23) eine Rechenstufe (10) enthält, welche die Fehlerhöhe (h) aus dem Beugungsgitterspurabstand (a), der Nummer der empfangenen Beugungsordnung (m) sowie der Lichtwellenlänge ($\lambda$) bzw. dem Beugungswinkel ($\gamma$) und dem Abstand zweier aufeinanderfolgender Videofehlerimpulse ($A_1, A_2$) nach den folgenden Formeln berechnet:

$a \cdot \sin\gamma = m \cdot \lambda$

und     $d_1 = h \cdot \tan\gamma$

9. Vorrichtung nach einem der Ansprüche 3 bis 5 oder 7, 8,

dadurch **gekennzeichnet,**

daß auch im Durchlicht eine Photoempfangsanordnung vorgesehen ist und auch das von dieser abgegebene Videosignal in bezug auf Amplitudenhöhen und -abstände ausgewertet wird, wobei die im Durchlicht und in Reflexion erhaltenen Videosignale ebenfalls in Vergleich gesetzt werden.

10. Vorrichtung nach einem der vorhergehenden Ansprüche,

dadurch **gekennzeichnet,**

daß die Licht-Abtastvorrichtung aus einem die Fahrstrahlebene bestimmenden streifenförmigen Hohlspiegel (20) sowie einem in dessen Brennpunkt angeordneten Spiegelrad (19) und einem dieses beaufschlagenden Laser (18) besteht, und/oder daß die Photoempfangsanordnungen aus einem optisch parallel zu dem Sendehohlspiegelstreifen (20) angeordneten Empfangshohlspiegelstreifen (22, 25) und einem in dessen Brennpunkt angeordneten Photoempfänger (15, 16) besteht, und/oder daß die Licht-Abtastvorrichtung aus einem die Fahrstrahlebene bestimmenden Abtastobjektiv (Scan-Objektiv) sowie einem in dessen hinterer Pupille angeordneten Spiegelrad und einem dieses beaufschlagenden Laser besteht.

# Fig. 1

# Fig. 2

## Fig. 3

## Fig. 4

# Fig. 5

## Fig. 6

## Fig. 7

## Fig. 8

## Fig. 9

EP 0 323 564 A2

Fig. 10

Fig. 11

## Fig. 12

## Fig. 13

# Fig. 14

# Fig. 15

## Fig. 16

$$d_1 \leq d_{1max.}$$